# EUROPEAN PATENT APPLICATION

(11) **EP 2 701 091 A1**
(43) Date of publication of application: **26.02.2014**
(21) Application number: 13001470.7
(22) Date of filing: 22.03.2013
(51) Int. Cl.: G06F 21/55, G06F 21/83, G07F 7/10

(54) **CONTROL AND MONITORING MODULE OF SAFE DEVICES**

(30) Priority: 23.03.2012 BR 102012006544
(71) Applicant: Tecvan Informática LTDA., 45652-580 Ilheus (BR)
(72) Inventor: Pereira, Jorge Ribeiro, 09820-680 Sao Bernardo do Campo (BR)
(74) Representative: Izquierdo Faces, José

(57) **Abstract**

There are different solutions on the market for executing the financial transactions, thanks to the use of dedicate equipment, named herein Safe Equipment, such as the Point of Sale (POS) Terminals, the PINPAD Terminals and the Encrypted Keyboards, these latter widely used in self-service banking systems. The Control and Monitoring Module of Safe Devices is a device, internal or external to the Safe Equipment, designed and implemented in order to detect current consumption variations of the equipment, thus indicating the presence of undesired circuit inserted in parallel in theoriginal circuit of the Safe Equipment; this Control Module must be implemented through the use of electrical current consumption sensors in microprocessor circuits capable of identifying variations in consumption. The circuit will have a base value of current consumption, which can be stipulated by statistical studies for each model of Safe Equipment, specifically.

## Description

It refers to the present descriptive report to the Privilege of Invention in the field of safe devices for transactions and / or electronic transfers of securities. Such devices are characterized by being equipment subjected to fairly strict requirements, giving them high levels of security.

These devices running such electronic transfers of securities will be treated in this document by Safe Equipment. The Point of Sale (POS) Terminals are Examples of Safe Equipment, the PINPAD Terminals and the Encrypted Keyboards, these latter widely used in self-service banking systems.

The Safe Equipment are, therefore, those applied to the banking transactions process; from payments by using cards in credit or debit transactions, either by reading the magnetic stripe, whether through reading the Smart Card ID chip, both for electronic contact chips and Contactless chips; and any other securities transaction that require electronic validation.

Because they deal with financial transactions, the Safe Equipment is subject to attack by malicious individuals, acting unlawfully trying to insert circuits able to get the data from cards and record the users' passwords, such circuits are popularly known as "*chupa cabra*" ("goat sucker") and end up creating a database that will be then transmitted to some external equipment, such as a personal computer. This occurs through processes of communication that can be via Bluetooth, Wifi, GSM or similar.

These databases are used by fraudsters who use the information to create replicas of the cards. With these replicas they can perform monetary transactions, payments, etc., in an unauthorized manner, prejudicing the original card owner. This activity is popularly known as cards "cloning".

As the action of fraudsters depends on the installation of a "*chupa cabra*" circuit within the Safe Equipment, having a mechanism that can detect the presence of a foreign circuit in the Safe Equipment may indicate that such equipment has been subjected to unauthorized intervention, unlawful. The inclusion of such additional circuit to the equipment will certainly cause the consumption to increase. Thus, the main objective of this invention is to create a module, internal or external to the Safe Equipment, which will detect changes in consumption of equipment power, thereby indicating that the circuit may have been tampered.

As these equipment work constantly exchanging information with external devices, other objective of this invention is that the control and monitoring module of the Safe Equipment provide, or make available, constantly the electric current consumption data of the system to the CPU of the apparatus, which can pass on this information to a control and supervision software of operating mode of the Safe Equipment With this feature, the control module may become a powerful tool, since the control software may display warning messages for both users and remotely for maintenance teams of the Safe Equipment, which must investigate the conditions of the apparatus.

This control and monitoring module of the Safe Equipment, after choosing an internal solution, must be inserted by the manufacturer of the Safe Equipment, so that this module will be an item that will leave the factory, along with the concerned Safe Equipment and with all necessary settings already implemented.

This module, combined with the screening system, allows routines to be performed for evaluation and validation of the equipment by the Safe Equipment itself.

To install the Control and Monitoring Module, the following solutions can be used:
- internal module to the Safe Equipment, but physically independent from other equipment circuits;
- Internal module to the Safe Equipment, inserted in the own circuit of the apparatus;
- External module to the Safe Equipment.

Next we have three schematic diagrams which illustrate how each solution for different types of control and monitoring module will be installed in the Safe Equipment. The following references are used:
1.- Control and monitoring module
2.- Front cover of the cabinet
3.- Processing board
4.- Back cover of the cabinet
5.- Electrical current consumption sensor
6.- Power input
7.- Power of the control and monitoring module (1)

Figure 1 - Presentation of the Control and Monitoring Module (1), internal to a Safe Equipment, but physically independent of the other circuits.

Figure 2 - Presentation of the Control and Monitoring Module (1), internal to a Safe Equipment, inserted into the own circuit of the apparatus.

Figure 3 - Presentation of the Control and Monitoring Module (1), external to a Safe Equipment.

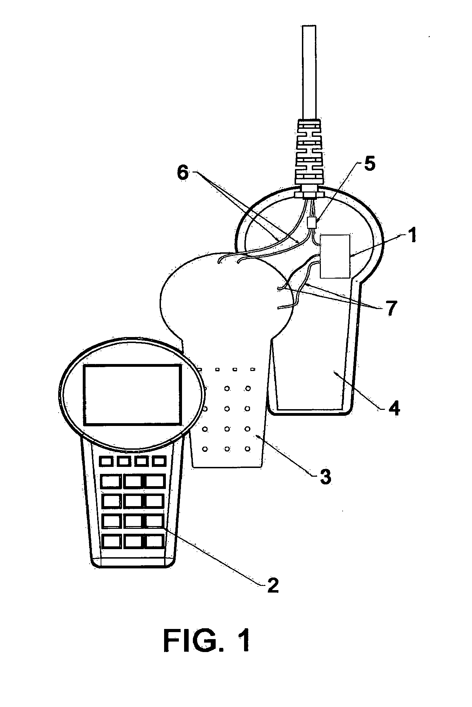

According to the related illustrations, we can see in Figure 1 that the operation of the Control and Monitoring Module (1), independent and internal to the Safe Equipment occurs from placing of the current consumption sensor (5) in the power input (6) of the apparatus. The results of the electric current measurements are continuously treated in the Control Module (1), which must be installed inside the very Safe Equipment, where there is physical space for that. The evaluation on the location the Module will be placed inside the product should be studied by the very Safe Equipment manufacturer, so that there is a standardization regarding to the assembly mode and location of the Control Module (1).

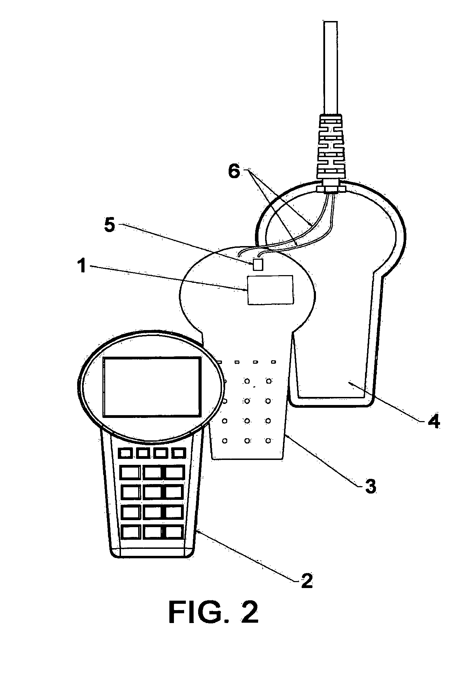

In Figure 2 we can see that the Control and Monitoring Module (1) can still be developed so that it will be an integral part of the circuit board of the very Safe Equipment, if this feature is previously established for the equipment still in its project phase.

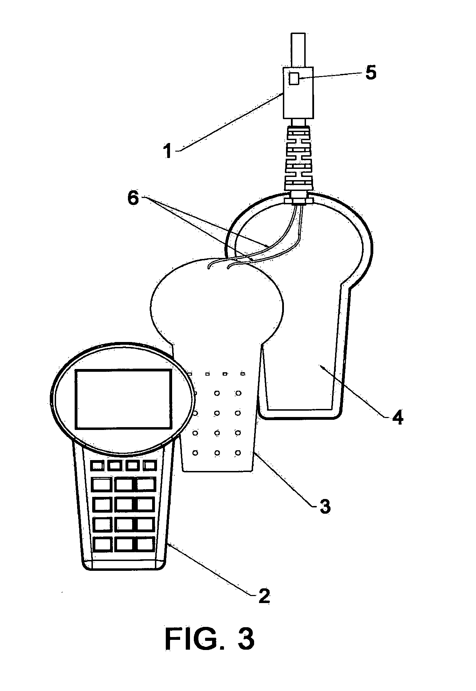

Finally, Figure 3 shows that there is the possibility of we having Control and Monitoring Module (1) externally mounted to the Safe Equipment.

For this type of solution, it is necessary to consider that the power cable of the Safe Equipment must also contain the data transmission connections of the Module for the CPU of the Safe Equipment.

## Claims

1. Control and monitoring module of safe devices, **characterized by** the fact that an electronic circuit internally attached, or externally, to a Safe Equipment capable of analyzing the power consumption of the Safe Equipment, indicating the possible existence of foreign circuits (popularly called "chupa cabras") used to record the cards identification numbers, as well as users passwords in order to transmit these data for duplicating cards, acting fraudulently and illegally.

2. Control and monitoring module of safe devices, according to the claim 1, **characterized by** the fact that said module (1) is composed of a microprocessor system with electrical current consumption sensors (5), capable of comparing actual consumption of the Safe Equipment with its expected consumption, thus evaluating the presence of new undesired devices within the Safe Equipment.

3. Control and monitoring module of safe devices, according to the claim 2, **characterized by** the fact that said module (1) must be configured for a given Safe Equipment specifically, taking the expected value of current flow, measured in amperes, determined by measurements of consumption of several copies of the Safe Equipment in question.

4. Control and monitoring module of safe devices, according to the claim 3, **characterized by** the fact that the consumption survey of the Safe Equipment must consider the consumption of the own Monitoring and Control Module already inserted in the equipment

5. Control and monitoring module of safe devices, according to the claim 4, **characterized by** the fact that the module (1) transmit the electric current consumption measurements data for the CPU of the Safe Equipment, which can automatically enter the blocked state, when some consumption increase is detected, depending on the settings of both module (1) and Safe Equipment.

6. Control and monitoring module of safe devices, according to the claim 5, **characterized by** the fact that said equipment can send information to the central processor of the Safe Equipment, which can communicate with an external software that will form a Screening System, where will be the information for certain specific Safe Equipment, which will be under review.

7. Control and monitoring module of safe devices, according to the claim 6, **characterized by** the fact that said module (1) can be implemented with several solutions presented so far, in which the communication module can be implemented with wireless technology (contactless), for example, may still communicate in a direct manner with external screening systems, without necessarily being connected to the CPU of the Safe Equipment

8. Control and monitoring module of safe devices, according to the claim 7, **characterized by** the fact that said module (1) may be implemented on the circuit board of the very Safe Equipment, if this feature is planned for the apparatus in its design phase.
